# EUROPÄISCHE PATENTANMELDUNG

(11) **EP 3 992 991 A1**
(43) Veröffentlichungstag der Anmeldung: **04.05.2022**
(21) Anmeldenummer: 21196460.6
(22) Anmeldetag: 14.09.2021
(51) Int. Cl.: H01B 17/28, H02G 3/04

(54) **DURCHFÜHRUNGSANORDNUNG SOWIE VERFAHREN ZU DEREN HERSTELLUNG, TRANSFORMATOR UND VERWENDUNG**

(30) Priorität: 27.10.2020 DE 102020213476
(71) Anmelder: Siemens Energy Global GmbH & Co. KG, 81739 München (DE)
(72) Erfinder: Fruhnert, Stefan, 96271 Grub a. Forst (DE); Loppach, Karsten, 90482 Nürnberg (DE); Vanni, Marco, 90482 Nürnberg (DE)

(57) **Zusammenfassung**

Die Erfindung betrifft eine Durchführungsanordnung (2) für einen Transformator mit wenigstens einem rohrförmigen Durchführungselement (1), das ein- oder mehrschichtig ausgebildet ist, wobei das wenigstens eine Durchführungselement (1) wenigstens eine Schicht (3, 6, 7, 8, 9, 10), die ein dielektrische Grundmaterial (4) und ein elektrisch leitfähiges Leitmaterial (5) aufweist oder daraus besteht, umfasst, und/oder dass das wenigstens eine Durchführungselement (1) zwei oder mehr fest miteinander verbundene Schichten (3, 6, 7, 8, 9, 10) aufweist, wobei wenigstens eine der Schichten (3, 6, 7, 8, 9, 10) aus einem dielektrischen Grundmaterial (4) und wenigstens eine der Schichten (3, 6, 7, 8, 9, 10) aus einem elektrisch leitfähigen Leitmaterial (5) besteht, das ein- oder mehrschichtig ausgebildet ist. Darüber hinaus betrifft die Erfindung ein Verfahren zur Herstellung einer Durchführungsanordnung, einen Transformator und die Verwendung einer Durchführungsanordnung.

## Beschreibung

Die vorliegende Erfindung betrifft eine Durchführungsanordnung für einen Transformator mit wenigstens einem rohrförmigen Durchführungselement. das ein- oder mehrschichtig ausgebildet ist. Darüber hinaus betrifft die Erfindung ein Verfahren zur Herstellung einer Durchführungsanordnung, einen Transformator und die Verwendung einer Durchführungsanordnung.

In Transformatoren werden zum Schutz gegen Überspannungen bzw. zur elektrischen Ableitung von Spannungen meist Bauteile aus einem metallischen Material eingesetzt. Dabei steht nicht immer ein besonders guter elektrischer Leitwert des metallischen Materials im Vordergrund. Vielmehr ist die reine elektrische Ableitung von Strom/Spannung von Bedeutung. Es kann auch nur das Vorhandensein der Spannung für reine Schaltimpulse verwendet werden, beispielsweise um nachfolgenden Regeleinrichtungen eine Abschaltung des Systems zu gestatten. So können beispielsweise mehrere Rohre und Rohrbögen, die beispielsweise aus Kupfer oder Aluminium hergestellt sind, miteinander verschweißt werden, um eine rührförmige Durchführungsanordnung zu erhalten. Durch diese Rohrdurchführung können dann später die Zuleitungen für den Transformator von außen nach innen geführt werden. Das Schweißen solcher Rohrkonstruktionen ist jedoch sehr aufwendig. Zudem können die während des Schweißprozesses auftretenden hohen Temperaturen unerwünschte Spannungen in das Material einbringen.

Es ist daher eine Aufgabe der vorliegenden Erfindung, eine alternative Durchführungsanordnung für Transformatoren zu schaffen. Darüber hinaus ist es eine Aufgabe der vorliegenden Erfindung, ein Verfahren zur Herstellung einer solchen Durchführungsanordnung anzugeben,
Die erstgenannte Aufgabe wird bei einer Durchführungsanordnung der eingangs genannten Art dadurch gelöst, dass das wenigstens eine Durchführungselement wenigstens eine Schicht, die ein dielektrische Grundmaterial und ein elektrisch leitfähiges Leitmaterial aufweist oder daraus besteht, umfasst, und/oder dass das wenigstens eine Durchführungselement zwei oder mehr fest miteinander verbundene Schichten aufweist, wobei wenigstens eine der Schichten aus einem dielektrischen Grundmaterial und wenigstens eine der Schichten aus einem elektrisch leitfähigen Leitmaterial besteht.

Die zweitgenannte Aufgabe wird gelöst durch ein Verfahren zur Herstellung einer erfindungsgemäßen Durchführungsanordnung mit wenigstens einem rohrförmigen Durchführungselement mit wenigstens einer Schicht, die ein dielektrisches Grundmaterial und ein elektrisch leitfähiges Leitmaterial aufweist oder daraus besteht, bei dem das oder wenigstens eines der Durchführungselemente durch Extrusion oder Spritzgießen erhalten wird, wobei die wenigstens eine Schicht, die das Grundmaterial und das Leitmaterial umfasst oder daraus besteht, hergestellt wird, indem ein Ausgangsmaterial, das das Grundmaterial aufweist oder daraus besteht, bereitgestellt wird, und das Ausgangsmaterial zum Erhalt einer rohrförmigen Schicht extrudiert oder spritzgegossen wird, und während des Extrudierens oder Spritzgießens das Leitmaterial in das Grundmaterial eingebracht wird, bevorzugt in Faser- und/oder Pulverform, oder die wenigstens eine Schicht, die das Grundmaterial und das Leitmaterial umfasst oder daraus besteht, hergestellt wird, indem ein Ausgangsmaterial, dass das Grundmaterial und darin insbesondere in Pulver- und/oder Faserform eingebettet das Leitmaterial aufweist oder daraus besteht, bereitgestellt wird, und das Ausgangsmaterial zum Erhalt einer rohrförmigen Schicht extrudiert oder spritzgegossen wird.

Gegenstand der Erfindung ist auch ein Verfahren zur Herstellung einer erfindungsgemäßen Durchführungsanordnung mit wenigstens einem rohrförmigen Durchführungselement mit wenigstens einer Schicht, die aus einem dielektrischen Grundmaterial und optional einem elektrisch leitfähigen Leitmaterial besteht, und mit wenigstens einer Schicht, die aus einem elektrisch leitfähigen Leitmaterial besteht, bei dem die wenigstens eine Schicht, die aus dem Leitmaterial besteht, als bevorzugt innen- und/oder außenseitig mit einer Haftvermittlerschicht versehenes rohrförmiges Blech bereitgestellt wird, und die wenigstens eine Schicht, die aus dem Grundmaterial und optional dem Leitmaterial besteht, hergestellt wird, indem ein Ausgangsmaterial, das aus dem Grundmaterial und optional dem Leitmaterial besteht, bereitgestellt wird, und das Ausgangsmaterial zum Erhalt einer das rohrförmigen Schicht extrudiert oder spritzgegossen wird, wobei das Ausgangsmaterial auf oder in das rohrförmige Blech extrudiert oder spritzgegossen wird, wobei optional während des Extrudierens oder Spritzgießens das Leitmaterial in das Grundmaterial eingebracht wird, bevorzugt in Faser- und/oder Pulverform.

Die vorliegende Erfindung macht es mit anderen Worten möglich, für die Leistungsdurchführung in Transformatoren die Vorteile von dielektrischen Materialien mit den Vorteilen von elektrischen leitfähigen Materialien auf optimale Weise zu kombinieren. Dazu ist vorgesehen, dass eine Durchführungsanordnung eines oder auch mehrere Rohrdurchführungselemente aufweist, die aus einer Kombination aus dielektrischem Grundmaterial und elektrisch leitfähigem Leitmaterial gefertigt sind bzw. werden.

Dielektrische Materialien, wie beispielsweise Kunststoff, lassen sich oftmals leichter verarbeiten und Bauteile aus diesen lassen sich in der Regel leichter miteinander verbinden. Gegenüber Durchführungen allein aus beispielsweise Metall kann daher die Fertigung vereinfacht werden. Dielektrische Materialien sind auch oftmals günstiger und leichter, was ebenfalls Vorteile bietet. Da die dielektrischen Materialien mit leitfähigen kombiniert werden, kann gleichzeitig eine elektrische Leitfähigkeit erhalten und beispielsweise eine Ableitfunktion zuverlässig gewährleistet werden.

Die erfindungsgemäße Materialkombination kann dabei innerhalb einzelner Schichten vorliegen bzw. erhalten werden. Mit anderen Worten kann das bzw. das jeweilige Durchführungselement eine oder mehrere Schichten umfassen, die jeweils eine Materialkombination von dielektrischem Grundmaterial und elektrisch leitfähigem Leitmaterial aufweisen. Hier hat sich als ganz besonders geeignet erwiesen, wenn das Leitmaterial in das Grundmaterial eingebettet ist, beispielsweise in Form von Fasern und/oder Pulver. Rein beispielhaft sei genannt, dass ein Metallpulver, etwa ein Kupfer und/oder Aluminium und/oder eines oder mehrere weitere Metalle umfassendes Pulver, in eine Polymermatrix als Grundmaterial eingebettet ist. In besonders bevorzugter Ausgestaltung ist das Leitmaterial in das Grundmaterial eincompoundiert, dies beispielsweise in Pulverform, und/oder einextrudiert, dies beispielsweise in Form von Fasern. Ein Leitmaterial-Pulver kann prinzipiell Partikel verschiedener Form aufweisen, beispielsweise kugelförmige und/oder plättchenförmige Partikel.

Insbesondere mittels eingebetteter, etwa einextrudierter Fasern kann auch gezielt die mechanische Festigkeit erhöht werden.

Wenn das wenigstens eine Durchführungselement wenigstens eine Schicht umfasst, die ein dielektrisches Grundmaterial und ein elektrisch leitfähiges Leitmaterial aufweist oder daraus besteht, gilt bevorzugt, dass der Anteil des Leitmaterials in der wenigstens einen Schicht 20 bis 80 Gewichtsprozent beträgt. Das Leitmaterial macht dann mit anderen Worten 20 bis 80 Gewichtsprozent der gesamten Schicht aus, was sich als ganz besonders geeignet erweisen hat.

Das Leitmaterial ist zweckmäßigerweise über die wenigstens eine Schicht verteilt. Es findet sich insbesondere über die gesamte Ausdehnung der bzw. der jeweiligen Schicht eine Mischung von Leitmaterial und Grundmaterial. Dann kann über die gesamte Ausdehnung der bzw. der jeweiligen Schicht eine elektrische Leitfähigkeit gewährleistet werden.

Alternativ oder zusätzlich dazu, dass die erfindungsgemäße Materialkombination von Grund- und Leitmaterial innerhalb einer Schicht bzw. einzelner Schichten realisiert ist bzw. wird, kann auch vorgesehen sein, dass die Materialkombination über zwei oder mehr verschieden gestaltete Schichten vorliegt bzw. erhalten wird. Mit anderen Worten kann wenigsten ein rohrförmiges Durchführungselement vorgesehen sein bzw. hergestellt werden, das wenigstens eine Schicht aus einem dielektrischen Grundmaterial und wenigstens eine Schicht aus einem elektrisch leitfähigen Leitmaterial aufweist. Hier sei rein beispielhaft genannt, dass ein rohrförmiges Durchführungselement zwei Schichten aufweist, von denen eine aus einem Kunststoff und die andere aus einem Metall besteht.

Für den Fall, dass ein Durchführungselement mehrschichtig ausgebildet ist, gilt insbesondere, dass jede der Schichten rohrförmig ist und die Schichten koaxial sind und übereinanderliegen. Es kann beispielsweise vorgesehen sein, dass eine rohrförmige Schicht aus Kunststoff eine rohrförmige Schicht aus Metall außenseitig umgibt oder auch innenseitig von dieser liegt. Bei dem Verfahren kann entsprechend vorgesehen sein, dass außenseitig auf und/oder innenseitig von einer rohrförmigen Metallschicht wenigstens eine rohrförmige Kunststoffschicht hergestellt wird.

Weiter bevorzugt kann gelten, dass wenigstens zwei der Schichten mittels eines Haftvermittlermaterials miteinander verbunden, insbesondere verschweißt sind. So ist insbesondere sichergestellt, dass sich die Schichten nicht voneinander ablösen, beispielsweise auch nicht, wenn eine nachträgliche Formveränderung des bzw. des jeweiligen Durchführungselementes bedingt, dieses beispielsweise gebogen wird. Als besonders bevorzugt haben sich Haftvermittlerschichten zwischen Schichten aus einem dielektrischen Grundmaterial, z.B. Kunststoff, und Schichten aus einem leitfähigen Leitmaterial, z.B. Metall, erwiesen. Eine Haftvermittlerschicht kann zuverlässig ein Ablösen verhindern.

Im Rahmen der vorliegenden Erfindung sind prinzipiell die verschiedensten Schichtaufbauten denkbar. Im simpelsten Falle ist das oder wenigstens eines der rohrförmigen Durchführungselemente durch eine einzelne rohrförmige Schicht gegeben, die dann sowohl Grund- als auch Leitmaterial aufweist, etwa eine einzelne Schicht mit einem Kunststoff als Grundmaterial, in das z.B. ein Metallpulver eingebettet, insbesondere eincompoundiert ist bzw. wird.

Selbstverständlich können auch zwei, drei, vier oder mehr Schichten vorgesehen sein. So können besonders vorteilhaft Schichten mit unterschiedlich elektrisch leitenden / nicht leitenden Funktionen kombiniert werden. Rein beispielhaft für ein Mehrschichtsystem sei eine rohrförmige Metallschicht, die außen- und/oder innenseitig von einer rohrförmigen Kunststoffschicht umgeben ist oder umgekehrt, also eine Kunststoffschicht, die innen und/oder außen von einer Metallschicht umgeben ist, genannt.

Es kann auch ein mehrschichtiger, abwechselnder Aufbau von elektrisch leitenden zu nichtleitenden Schichten erhalten werden.

Natürlich ist es auch möglich, dass eine oder mehrere Schichten mit Grund- und Leitmaterial in Kombination mit einer oder mehreren Schichten aus Grund- oder Leitmaterial vorliegen. In Weiterbildung ist entsprechend vorgesehen, dass wenigstens eine der Schichten ein dielektrisches Grundmaterial und ein elektrisch leitfähiges Leitmaterial aufweist, und wenigstens eine der Schichten aus einem dielektrischen Grundmaterial oder aus einem elektrisch leitfähigen Leitmaterial besteht. Beispielhaft sei genannt, dass eine Schicht mit Grund- und Leitmaterial, etwa eine Schicht aus einem Kunststoff mit eingebettetem Metallpulver, außen- und/oder innenseitig von einer Metall- oder Kunststoffschicht umgeben ist.

Wenn mehrere der Schichten jeweils ein dielektrisches Grundmaterial und ein elektrisch leitfähiges Leitmaterial aufweisen, gilt bevorzugt, dass sich der Leitwert dieser Schichten voneinander unterscheidet. U.a. auf diese Weise können verschiedene Leitungseigenschaften über verschiedene Schichten realisiert werden.

Sind mehrere Schichten vorhanden, ist in bevorzugter Ausgestaltung vorgesehen, dass wenigstens zwei oder auch alle Schichten zumindest abschnittsweise form- bzw. kraftschlüssig aneinander anliegen.

Die erfindungsgemäße Durchführungsanordnung kann ferner durch das wenigstens eine Durchführungselement gebildet werden oder auch eine oder mehrere weitere Komponenten neben diesem aufweisen.

Was das bzw. das jeweilige dielektrische Grundmaterial angeht, hat sich als ganz besonders geeignet erwiesen, wenn diesen einen Kunststoff oder eine Kombination mehrerer Kunststoffe umfasst oder durch einen Kunststoff oder eine Kombination mehrerer Kunststoffe gegeben ist. Beispielhaft für geeignete Kunststoffe seien genannt: PE, PA, POM-C, PC, PSU, PES, PESU, PVDF, PTFE, PPS PEEK und PET. Dabei steht in vorbekannter Weise PE für Polyethylen, PA für Polyamide, POM für Polyoxymethylene (und -C für Copolymer), PC für Polycarbonat, PSU für Polysulfon, PES und PESU für Polyethersulfon, PVDF für Polyvinylidenfluorid, PTFE für Polytetrafluorethylen, PPS für Polyphenylensulfid, PEEK für Polyetheretherketon, PET für Polyethylenterephthalat.

Die Auswahl des bzw. des jeweiligen dielektrischen Grundmaterials, etwa des Kunststoffs bzw. der Kunststoffmischung, erfolgt zweckmäßiger Weise in Abhängigkeit des jeweiligen Anwendungsfalles. Die Wahl kann z.B. abhängig von der Einsatztemperatur des Transformators, dem verwendeten Typ des Transformatorenöls, den mechanischen und elektrischen Belastungen einschließlich der Umweltbedingungen eines Transformators erfolgen.

Zweckmäßiger Weise wir ein Kunststoff bzw. werden Kunststoffe gewählt, die sich durch eine gute Wärmeformbeständigkeit auszeichnen und die nicht durch Materialien angegriffen werden, die in Transformatoren typischerweise vorkommen und/oder bei der Herstellung solcher Verwendung finden. Beispielhaft seien hier Transformator-Öle, Fette, Kerosin, Spiritus und Aceton genannt. Es wird insbesondere ein Kunststoff gewählt bzw. werden insbesondere Kunststoffe gewählt, die sich durch eine Dauertemperaturstabilität von mindestens 80°C auszeichnen.

Für das bzw. das jeweilige elektrisch leitfähige Leitmaterial hat sich ein Metall oder auch eine Kombination mehrerer Metalle bewährt. Es kann aus einem oder mehreren Metallen bestehen bzw. diese umfassen. Als geeignete Metalle haben sich beispielsweise Kupfer, Aluminium, Silber, Zinn und/oder Eisen erwiesen. Eisenhaltige Materialien können sowohl Legierungen als auch Edelstähle im weitesten Sinne sein. Natürlich sind auch Kombination dieser Materialien möglich, wie beispielsweise eine Matrix aus Kupfer und Zinn.

Alternativ oder zusätzlich kann vorgesehen sein, dass das oder wenigstens eines der elektrisch leitfähigen Leitmaterialien Kohlenstoff, insbesondere Graphit, und/oder wenigstens einen dotierten Kunststoff und/oder wenigstens ein dotiertes oder metallisiertes Glas und/oder wenigstens eine dotierte oder metallisierte Keramik umfasst oder dadurch gegeben ist.

Es sei betont, dass das bzw. im Falle mehrerer das jeweilige Durchführungselement natürlich auch mehrere, verschiedenen dielektrische Grundmaterialien und/oder mehrere, verschiedene elektrisch leitfähige Leitmaterialien umfassen kann. Beispielsweise kann sich eine Schicht eines solchen durch ein Grund- und Leitmaterial auszeichnen und eine weitere Schicht eines solchen durch ein davon verschiedenes Grund- und/oder Leitmaterial.

Insbesondere über Metalle und/oder Keramiken, etwa in Faserform, kann auch eine gute Wärmeleitung gewährleistet werden, so dass beim Auftreten von Wärmehotspots die Wärme auf eine größere Fläche verteilt werden kann. Im Ergebnis kommt es zu einer Erhöhung der Lebensdauer aufgrund der Kühlung der Hotspots.

Kunststoffe etwa zeichnen sich in der Regel durch eine Wärmeleitfähigkeit im Bereich von 0,1 bis 0,5 W/mK aus. Durch Zuführung des Leitmaterials in verschiedenen Konzentrationen wird es insbesondere möglich, die Wärmeleitfähigkeit in Bereiche von 5 bis 40 W/mK zu steigern. Die Einheit W/mK steht dabei in vorbekannter Weise für Watt pro Meter und Kelvin.

Für den Fall, dass eine oder mehrere aus einem elektrisch leitfähigen Leitmaterial bestehende Schichten vorgesehen sind bzw. werden, kann ferner gelten, dass diese durch ein in Rohrform gebrachtes, insbesondere in Rohrform gebogenes Blech gegeben sind bzw. als solche(s) bereitgestellt werden. Dies hat sich als ganz besonders geeignet erwiesen. Es sei betont, dass es sich auch um vergleichsweise dünne Bleche handeln kann, die auch als Folien bezeichnet werden könnten. Vorliegend wird einheitlich der Begriff Blech genutzt.

Die Blechdicke kann beispielsweise im Bereich von 0,1 mm bis 3 mm, bevorzugt 0,1 mm bis 2,5 mm liegen.

Was die Dicke von Schichten angeht, die ein dielektrisches Grundmaterial und optional ein Leitmaterial umfassen, hat sich als besonders geeignet erwiesen, wenn diese im Bereich von 0,1 mm bis 7 mm, bevorzugt 0,1 mm bis 5 mm liegt.

Es sein angemerkt, dass bevorzugt die Dicke einzelner Schichten in den genannten Bereichen liegt. Bei Vorhandensein mehrerer Schichten kann sich entsprechend eine höhere Gesamtdicke des bzw. des jeweiligen Durchführungselementes ergeben.

Der Innendurchmesser des bzw. des jeweiligen Durchführungselementes kann beispielsweise im Bereich von 30 mmm bis 400 mm, bevorzugt 40 mm bis 300 mm liegen. Alternativ oder zusätzlich kann vorgesehen sein, dass der Außendurchmesser des bzw. des jeweiligen Durchführungselementes im Bereich von 30 mmm bis 400 mm, bevorzugt 40 mm bis 300 mm liegt.

Das bzw. das jeweilige rohrförmige Blech kann insbesondere durch Umformen, etwa Biegen aus einem flachen Blech erhalten werden bzw. worden sein, bevorzugt durch Umformen in einer Scheibenformstufe und/oder in einer Rollenformstufe und/oder Rohrformstufe.

Die bzw. die jeweilige Schicht eines erfindungsgemäßen Durchführungselementes, etwa das bzw. das jeweilige rohrförmige Blech einer solchen kann ferner zumindest abschnittsweise gewellt sein bzw. werden. Die bzw. die jeweilige Schicht kann insbesondere zumindest abschnittsweise in Längsrichtung bzw. axialer Richtung gewellt sein. Dann liegt im Längs- bzw. Axialschnitt betrachtet eine Wellung vor. Bevorzugt handelt es sich um eine sinusförmige Wellung. Eine Wellung wenigstens einer Schicht kann eine besonders hohe Flexibilität gewährleisten.

Wenn ein Durchführungselement wenigstens eine Schicht, insbesondere wenigstens ein rohrförmiges Blech umfasst, das abschnittsweise oder auch über seine gesamte Ausdehnung gewellt ist, kann für die weitere Schicht oder die weiteren Schichten des Durchführungselementes gelten, dass dieses ebenfalls zumindest abschnittsweise gewellt ist bzw. sind. Die Wellungen können dann auch einander entsprechen und die Schichten können auch im Bereich der Wellung formschlüssig aneinander anliegen. Es ist aber auch möglich, dass wenigstens eine Schicht, etwa wenigstens ein rohförmiges Blech zumindest abschnittsweise gewellt ist, dies jedoch für die oder wenigstens eine weitere Schicht nicht gilt.

Bei den erfindungsgemäßen Verfahren kann in Weiterbildung vorgesehen sein, dass für das Extrudieren ein Extrusionswerkzeug zum Einsatz kommt und das oder das jeweilige rohrförmige Blech während des Extrusionsvorganges durch das Extrusionswerkzeug gefördert wird, oder dass für das Spritzgießen ein Spritzgießwerkzeug zum Einsatz kommt und das oder das jeweilige rohrförmige Blech vor dem Spritzgießvorgang in das Spritzgießwerkzeug eingelegt wird. Bei dieser Ausführungsform wird mit anderen Worten eine elektrische Leitfähigkeit dadurch erzielt, dass man während es Extrusions- /Spritzgießprozesses wenigstens ein Blech mit in das Extrusionswerkzeug einlaufen lässt bzw. mit in das Spritzgießwerkzeug einlegt.

Bei dem Extrusionswerkzeug kann es sich beispielsweise um einen Extrusionskopf handeln, etwa einen Spritzkopf eines Extruders.

Durch das Extrudat bzw. den Spritzguss wird eine formschlüssige Verbindung zwischen dem (jeweiligen) Blech und der weiteren Schicht erhalten.

Bevorzugter Weise erfolgt eine Erwärmung des Bleches bevor es in das Extrusions-/Spritzgießwerkzeug eingelassen bzw. eingelegt wird. Hierdurch können thermische Spannungen vermieden werden.

Bezüglich zylindrischer rohrförmiger Bleche, die aus flachen Blechen erhalten werden bzw. wurden, kann beispielsweise gelten, dass die Breite des flachen Ausgangsbleches und der Innendurchmesser des Rohres, in welches das Blech umgeformt wird, derart gewählt ist bzw. wird, dass kein Überlapp erhalten wird sondern die Blechkanten bündig aneinander anliegen. Um zu verhindern, dass sich das Blech an einer solchen "Nahtstelle" öffnet, kann diese verschweißt werden, beispielsweise mit einem Laserschweißverfahren. Ein unerwünschtes Öffnen könnte beispielsweise infolge eines Biegens des das Blech umfassenden Durchführungselementes auftreten.

Alternativ dazu, dass die Blechbreite und der gewünschte Innendurchmesser entsprechend aneinander angepasst sind bzw. werden, kann die Blechbreite auch bewusst größer gewählt werden. Die Blechbreite kann entsprechend derart gewählt werden, dass nach dem Umformen des Blechs in eine Rohrform ein Überlappungsbereich vorliegt, in dem zwei Endabschnitte des Blechs überlappen. Der Überlapp kann dann ein unerwünschtes Öffnen des Bleches vermeiden. Dies gilt ganz besonders, wenn das Blech in bevorzugter Ausgestaltung an wenigstes einer Seite, konkret derjenigen Seite, die im zylinderrohrförmigen Zustand nach außen weist, mit einer Haftvermittlerschicht versehen ist, die dann im Überlappungsbereich ein Öffnen besonders zuverlässig vermeiden kann. Ein Schweißen, etwa Laserschweißen ist in diesem Falle nicht erforderlich.

Das bzw. das jeweilige Blech kann insbesondere als Abschirmung dienen. Vor allem über geeignete Wahl von Stärke und/oder Breite des bzw. des jeweiligen Bleches kann eine definierte Stromtragfähigkeit eingestellt werden.

Zweckmäßiger Weise hat bzw. erhält das bzw. das jeweilige Durchführungselement die Form eines zylindrischen Rohres, was sich als ganz besonders geeignet erwiesen hat. Alternative Rohrformen, etwa die Form eines Vierkantrohres, sind aber auch nicht ausgeschlossen. Wenn das wenigstens eine Durchführungselement die Form eines zylindrischen Rohres aufweist, gilt dies auch für die Schicht bzw. die Schichten, welche dieses umfasst bzw. welche dieses bilden.

Natürlich ist es möglich, dass die erfindungsgemäße Durchführungsanordnung mehrere rohrförmige Durchführungselemente umfasst bzw. im Rahmen der erfindungsgemäßen verfahren eine solche hergestellt wird.

Die mehreren Durchführungselemente sind bzw. werden dann bevorzugt miteinander verbunden, insbesondere miteinander verschweißt. Es kann ferner vorgesehen sein, dass sich wenigstens zwei der Durchführungselemente parallel zueinander erstrecken bzw. entsprechend angeordnet werden. Alternativ oder zusätzlich sind bzw. werden wenigstens zwei der Durchführungselemente nebeneinander angeordnet. Schließlich ist es auch möglich, dass wenigstens eines der Durchführungselemente hinter einem anderen der Durchführungselemente angeordnet ist bzw. wird.

Eine Verbindung von zwei rohrförmigen Durchführungselementen kann beispielsweise durch Schweißen, z.B. Muffen-/Stumpfschweißen, Heizwendelschweißen, Induktionsschweißen, oder auch durch Kleben erzielt werden bzw. hergestellt sein.

Insbesondere für den Fall, dass die erfindungsgemäße Durchführungsanordnung wenigstens zwei miteinander durch Schweißen verbundene rohrförmige Durchführungselemente umfasst, kann auch wenigstens ein Verbindungselement, beispielsweise wenigstens eine Muffe, vorgesehen sein, über welche die beiden Durchführungselemente miteinander verbunden sind.

Eine weitere vorteilhafte Ausgestaltung zeichnet sich dadurch aus, dass die Durchführungsanordnung wenigstens einen Metallgeflechtschlauch umfasst. Wenn die die Durchführungsanordnung mehrere rohrförmige Durchführungselemente aufweist, verbindet der wenigstens eine Metallgeflechtschlauch bevorzugt wenigstens zwei der rohrförmigen Durchführungselemente miteinander. Der Metallgeflechtschlauch ist bzw. wird beispielsweise außenseitig über zwei einander zugewandte Endbereich zweier Durchführungselemente angeordnet, insbesondere darübergestülpt. Ein Metallgeflechtschlauch kann beispielsweise eine durchgehende Abschirmung und/oder elektrische Leitfähigkeit über zwei oder mehr rohrförmigen Durchführungselemente hinweg gewährleisten.

Alternativ oder zusätzlich dazu kann die Durchführungsanordnung wenigstens ein flexibles Rohrelement umfassen.

Wenn die Durchführungsanordnung mehrere rohrförmige Durchführungselemente umfasst, kann das bzw. das jeweilige flexible Rohrelement beispielsweise (jeweils) zwei rohrförmige Durchführungselemente miteinander verbinden.

Solche Rohrelemente werden auch als Flexrohre bezeichnet und weisen bevorzugt einen "ziehharmonikaartig" geformten flexiblen Abschnitt auf. Wie sich gezeigt hat, können diese aus dem Stand der Technik prinzipiell vorbekannten Elemente im Rahmen der vorliegenden Erfindung sehr vorteilhaft zum Einsatz kommen. Wenn ein solches Flexrohr beispielsweise zwei Durchführungselemente einer erfindungsgemäßen Durchführungsanordnung miteinander verbindet, kann beim Einbau in einem Transformator besonders flexibel eine Winkelanpassung erfolgen.

Die erfindungsgemäße Durchführungsanordnung kann neben dem oder den rohrförmigen Durchführungselementen und gegebenenfalls vorhandenen weiteren Komponenten in bevorzugter Ausgestaltung wenigstens eine elektrische Leitung umfassen, die sich dann zweckmäßiger Weise durch das oder wenigstens eines der rohrförmigen Durchführungselemente erstreckt.

Gegenstand der Erfindung ist auch ein Transformator umfassend wenigstens eine erfindungsgemäße Durchführungsanordnung.

Die erfindungsgemäße Durchführungsanordnung dient insbesondere dazu, Zuleitungen für einen Transformator von außen nach innen zu führen, insbesondere durch ein Gehäuse eines Transformators. Entsprechend kann vorgesehen, dass wenigstens eine erfindungsgemäße Durchführungsanordnung Bestandteil eines Transformators ist. Die wenigstens eine Durchführungsanordnung, insbesondere das oder wenigstens ein rohrförmiges Durchführungselement dieser, erstreck sich dann zweckmäßiger Weise durch eine Gehäusewandung des Transformators von außen nach innen. Dann wird bevorzugt wenigstens eine elektrische Leitung durch das oder wenigstens eines der rohrförmigen Durchführungselemente durch die Gehäusewandung des Transformators von außen nach innen geführt.

Schließlich ist Gegenstand der Erfindung die Verwendung einer erfindungsgemäßen Durchführungsanordnung zur elektrischen Ableitung von Spannungen, insbesondere bei einem Transformator.

Weitere Merkmale und Vorteile der vorliegenden Erfindung werden anhand der nachfolgenden Beschreibung bevorzugter Ausführungsbeispiele unter Bezugnahme auf die beiliegende Zeichnung deutlich. Darin ist
- Figur 1: eine rein schematische Schnittdarstellung eines Durchführungselements eines ersten Ausführungsbeispiels einer erfindungsgemäßen Durchführungsanordnung;
- Figur 2: eine rein schematische Schnittdarstellung eines Durchführungselements eines zweiten Ausführungsbeispiels einer erfindungsgemäßen Durchführungsanordnung;
- Figur 3: eine rein schematische Schnittdarstellung eines Durchführungselements eines dritten Ausführungsbeispiels einer erfindungsgemäßen Durchführungsanordnung;
- Figur 4: eine rein schematische Schnittdarstellung eines Durchführungselements eines vierten Ausführungsbeispiels einer erfindungsgemäßen Durchführungsanordnung;
- Figur 5: eine rein schematische Schnittdarstellung eines Durchführungselements eines fünften Ausführungsbeispiels einer erfindungsgemäßen Durchführungsanordnung;
- Figur 6: eine rein schematische Schnittdarstellung eines Durchführungselements eines sechsten Ausführungsbeispiels einer erfindungsgemäßen Durchführungsanordnung;
- Figur 7: eine rein schematische Schnittdarstellung eines Durchführungselements eines siebten Ausführungsbeispiels einer erfindungsgemäßen Durchführungsanordnung;
- Figur 8: eine rein schematische Schnittdarstellung eines Durchführungselements eines achten Ausführungsbeispiels einer erfindungsgemäßen Durchführungsanordnung;
- Figur 9: eine rein schematische Schnittdarstellung eines Durchführungselements eines neunten Ausführungsbeispiels einer erfindungsgemäßen Durchführungsanordnung;
- Figur 10: eine rein schematische Schnittdarstellung zweier Durchführungselemente eines zehnten Ausführungsbeispiels einer erfindungsgemäßen Durchführungsanordnung;
- Figur 11: eine rein schematische Schnittdarstellung zweier Durchführungselemente eines elften Ausführungsbeispiels einer erfindungsgemäßen Durchführungsanordnung;
- Figur 12: eine rein schematische Seitenansicht eines zwölften Ausführungsbeispiels einer erfindungsgemäßen Durchführungsanordnung, die ein Flexrohr umfasst;
- Figur 13: eine rein schematische Seitenansicht eines dreizehnten Ausführungsbeispiels einer erfindungsgemäßen Durchführungsanordnung, die eine Metallgeflechtschlauch umfasst;
- Figur 14: in rein schematischer Darstellung ein flaches Blech, das in einer Formstufe in Rohrform gebracht und einem Extrusionsspritzkopf zugeführt wird;
- Figur 15: eine Rollenformstufe in rein schematischer Darstellung;
- Figur 16: die Endbereiche zweier Durchführungselemente, die durch Heizwendelschweißen miteinander verbunden werden Rollenformstufe in rein schematischer Darstellung; und
- Figur 17: zwei über eine Muffe miteinander verbundene Durchführungselemente in rein schematischer Darstellung.

Gleiche Bezugsziffern beziehen sich nachfolgend auf gleiche oder gleichartig ausgebildete Elemente bzw. Bereiche.

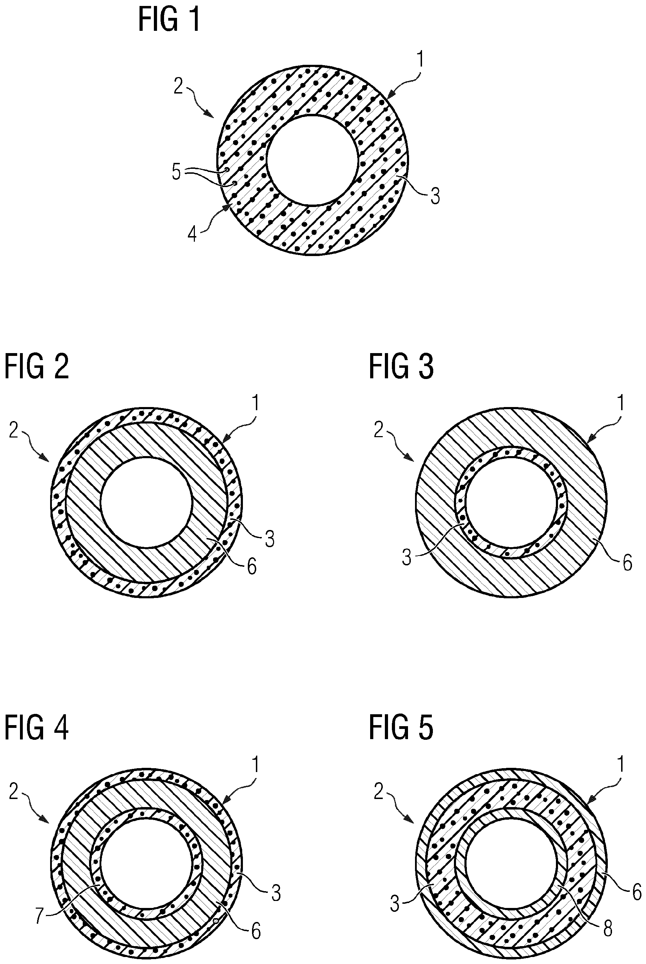

Die Figur 1 zeigt in rein schematischer Schnittdarstellung das rohrförmige Durchführungselement 1 eines ersten Ausführungsbeispiels einer erfindungsgemäßen Durchführungsanordnung 2 für einen Transformator. Die Durchführungsanordnung 2 bildet vorliegend ein Bauteil oder einen Teilbereich eines Transformatorbauteils. So kann die in Figur 1 dargestellte Durchführungsanordnung 2 eine Rohrkonstruktion oder einen Teil einer Rohrkonstruktion bilden, durch die Zuleitungen für den Transformator von außen nach innen geführt werden, insbesondere durch eine Gehäusewandung des Transformators.

Das Durchführungselement 1 ist zylinderrohrförmig, zeichnet sich entsprechend durch einen ringförmigen Querschnitt aus, wie er in der Figur 1 zu erkennen ist. Das Durchführungselement 1 ist bei dem ersten Ausführungsbeispiel einschichtig ausgebildet. Konkret wird es von einer rohrförmigen Schicht 3 gebildet, die ein dielektrische Grundmaterial 4 und ein elektrisch leitfähiges Leitmaterial 5 aufweist. Bei dem Beispiel besteht die Schicht 3 aus einer Mischung aus dem Grund-4 und dem Leitmaterial 5.

Das Grundmaterial 4 umfasst einen Kunststoff oder eine Kombination mehrerer Kunststoffe oder ist dadurch gegeben. Bei dem den Kunststoffen kann es sich beispielsweise um PE, PA, POM-C, PC, PSU, PES, PESU, PVDF, PTFE, PPS PEEK und/oder PET handeln. Vorliegend ist das Grundmaterial 4 durch PES gegeben, welches eine Kunststoffmatrix bildet, in welche das Leitmaterial 5 eingebettet, konkret eincompoundiert ist.

Das Leitmaterial 5 umfasst ein Metall oder eine Kombination mehrerer Metalle oder ist dadurch gegeben. Bei dem bzw. den Metallen kann es sich beispielsweise Kupfer, Aluminium, Silber, Zinn und/oder Eisen handeln. Alternativ oder zusätzlich dazu, dass das Leitmaterial 5 wenigstens ein Metall umfasst, kann es auch Kohlenstoff, insbesondere Graphit, und/oder wenigstens einen dotierten Kunststoff und/oder wenigstens ein dotiertes oder metallisiertes Glas und/oder wenigstens eine dotierte oder metallisierte Keramik umfassen oder daraus bestehen.

Vorliegend ist das Leitmaterial 5 durch Kupfer gegeben, welches in Pulverform in das durch die PES-Kunststoffmatrix gegebene Grundmaterial 5 eincompoundiert ist. Das Leitmaterial kann alternativ oder zusätzlich auch in anderer Form vorliegen, beispielsweise in Form von Fasern.

Der Anteil des Leitmaterials an der Schicht 3 beträgt 20 bis 80 Gewichtsprozent. Bei dem Beispiel gemäß Figur 1 macht das Leitmaterial 50 Gewichtsprozent der Schicht 3 aus. Die verbleibenden 50 Gewichtsprozent macht das Grundmaterial 5 aus.

Das Leitmaterial 5 ist ferner bevorzugt gleichmäßig über die Schicht 3 verteilt.

In der Figur 2 ist das zylinderrohrförmige Durchführungselement 1 eines zweiten Ausführungsbeispiels einer erfindungsgemäßen Durchführungsanordnung 2 in rein schematischer Schnittdarstellung gezeigt. Dieses unterscheidet sich von dem Beispiel gemäß Figur 1 dadurch, dass es mehrschichtig ausgebildet ist, konkret aus zwei Schichten 3, 6 besteht. Die beiden Schichten 3, 6 sind fest miteinander verbunden.

Die Schicht 3 ist analog zu der Schicht 3 des Beispiels gemäß Figur 1 ausgestaltet, umfasst also ein grund- 4 und ein in das Grundmaterial 4 eincompoundiertes Leitmaterial 5. Es handelt sich um das gleiche Grund- 4 und Leitmaterial 5 wie bei dem ersten Beispiel, wobei dies beispielhaft zu verstehen ist das Grund- 4 und Leitmaterial 5 auch andere bzw. noch weitere der vorgenannten Materialien umfassen könnte. Auch was die weiteren Merkmale der Schicht 3 des zweiten Beispiels aus Figur 2 angeht, besteht Übereinstimmung mit der Schicht 3 des Beispiels gemäß Figur 1.

Die zweite Schicht 6 des zweiten Beispiels besteht nicht wie die Schicht 3 aus einer Mischung aus einem dielektrischen Grundmaterial 4 und einem leitfähigen Leitmaterial 5 sondern allein aus einem dielektrischen Grundmaterial 4. Bei dem dielektrischen Grundmaterial 4 der Schicht 6 kann es sich um einen Kunststoff oder eine Kombination mehrerer Kunststoffe handeln, beispielsweise PE, PA, POM-C, PC, PSU, PES, PESU, PVDF, PTFE, PPS PEEK und/oder PET. Vorliegend ist das Grundmaterial 4 der Schicht 6 durch PES gegeben. Die Grundmaterialien 4 der Schichten 3 und 6 stimmen somit überein, wobei dies rein beispielhaft zu verstehen ist, sich diese also auch voneinander unterscheiden könnten. Die Schicht 6 könnte beispielsweise aus einem oder mehreren anderen Kunststoff(en) bestehen als das Grundmaterial 4 der Schicht 3.

Die Schicht 6 liegt, wie man erkennt, unter bzw. innerhalb der Schicht 3 und zeichnet sich durch eine größere Schichtdicke aus, wobei auch dies rein beispielhaft zu verstehen ist.

Alternativ dazu, dass die Schicht 3 mit dem Grund- 4 und Leitmaterial 5 außen und die Schicht 6 aus dem Grundmaterial 5 innen liegt, kann es natürlich auch umgekehrt sein. Dieser Fall ist beispielhaft in Figur 3 dargestellt, die das zylinderrohrförmige Durchführungselement 1 eines dritten Ausführungsbeispiels einer erfindungsgemäßen Durchführungsanordnung 2 zeigt. Mit Ausnahme der Reihenfolge der beiden Schichten 3, 6 kann dieses Beispiel mit demjenigen gemäß Figur 2 übereinstimmen. Natürlich können das Grund- 4 und Leitmaterial 5 der Schicht 3 und/oder das Grundmaterial 4 der Schicht 6 auch von den entsprechenden Materialien des Beispiels gemäß Figur 2 abweichen.

Es kann auch vorgesehen sein, dass das Durchführungselement einer erfindungsgemäßen Durchführungsanordnung mehr als zwei Schichten 3, 6 umfasst, beispielsweise drei oder vier oder mehr Schichten.

Die Figuren 4 und 5 zeigen dabei Beispiele mit zylinderrohrförmigen Durchführungselementen 1 eines vierten und fünften Ausführungsbeispiels erfindungsgemäßer Durchführungsanordnungen für Transformatoren, die jeweils dreischichtig ausgebildet sind.

Das Beispiel gemäß Figur 4 hat dabei eine äußere Schicht 3, die ein dielektrische Grundmaterial 4 und ein elektrisch leitfähiges Leitmaterial 5 umfasst oder daraus besteht, eine mittlere Schicht 6, die aus einem dielektrischen Grundmaterial 5 besteht, und eine innere Schicht 7, die - genau wie die äußere Schicht 3 - ein dielektrische Grundmaterial 4 und ein elektrisch leitfähiges Leitmaterial 5 umfasst oder daraus besteht.

Es kann sein, dass alle drei Schichten 3, 6, 7 das gleiche Grundmaterial 4 aufweisen. Bei dem gezeigten Beispiel ist dies der Fall, wobei es sich bei dem Grundmaterial 4 um PESU handelt. Alternativ ist es natürlich auch möglich, dass sich die Grundmaterialien 4 von zwei oder auch allen drei Schichten 3, 6, 7 voneinander unterscheiden, beispielswiese die mittlere Schicht 6 aus PE oder PES besteht.

Die äußere Schicht 3 umfasst als Leitmaterial 5 Kupfer, welches in Pulverform in das durch die PESU-Kunststoffmatrix gegebene Grundmaterial 4 dieser Schicht eincompoundiert ist. Die innere Schicht 7 kann das gleiche Leitmaterial 5 aufweisen, wie es hier der Fall ist. Alternativ kann sich das Leitmaterial der äußeren 3 und inneren Schicht 7 auch voneinander unterscheiden. Z.B. könnte die innere Schicht 7 alternativ oder zusätzlich zu Kupfer Aluminium, beispielsweise in Pulver- und/oder Faserform, umfassen.

Sowohl bei der äußeren Schicht 3 als auch bei der inneren Schicht 7 macht das Leitmaterial 60 Gewichtsprozent der jeweiligen Schicht 3, 7 aus und der Anteil an Grundmaterial 40 Gewichtsprozent. Auch hier gilt, dass sich die Anteile alternativ dazu voneinander unterscheiden können.

Durch verschiedene Leitmaterialien 5 und/oder verschiedene Anteile dieser an der jeweiligen Schicht 3, 7 kann beispielsweise eine unterschiedliche Leitfähigkeit dieser Schichten 3, 7 erzielt werden.

Alternativ dazu, dass außen und innen eine Schicht 3, 7 mit einem Grund- 4 und Leitmaterial 5 und dazwischen eine Schicht aus einem dielektrischen Grundmaterial 5 vorgesehen ist, kann eine Schicht 3 mit Grund- 4 und Leitmaterial 5 auch zwischen wie Schichten 6, 8 aus einem dielektrischen Grundmaterial 5 liegen, wie es beispielhaft in Figur 5 dargestellt ist. Die mittlere Schicht 3 kann wiederum analog zu den entsprechenden Schichten 3 der vorstehend beschriebenen Beispiele ausgebildet sein. Dies gilt auch für die Schichten 6 und 8, die analog zu den Schichten 6 der Ausführungsbeispiele aus den Figuren 2 bis 4 gestaltet sein, beispielsweise jeweils aus PES und/oder PESU bestehen können.

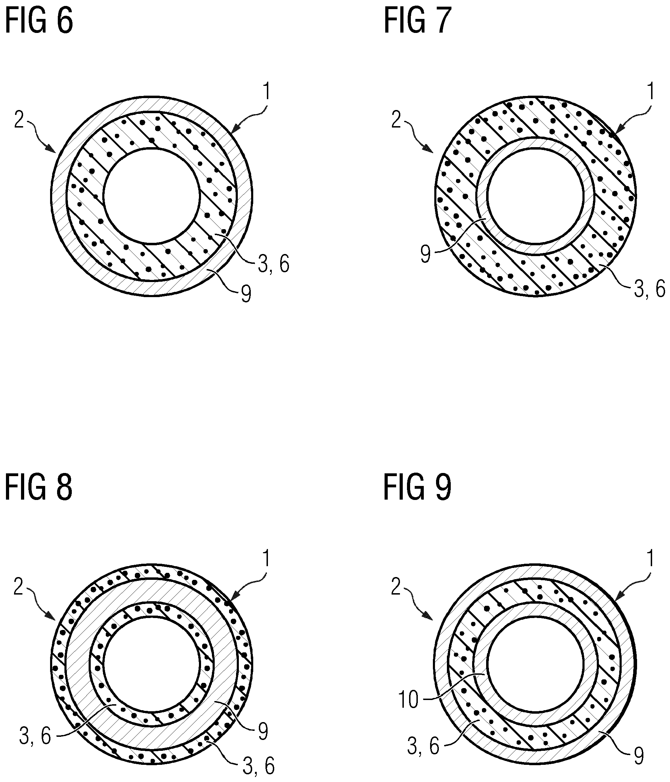

Es kann auch vorgesehen sein, dass das wenigstens eine Durchführungselement 1 einer erfindungsgemäßen Durchführungsanordnung 2 zwei oder mehr fest miteinander verbundene Schichten 6, 9 aufweist, wobei wenigstens eine der Schichten 6 aus einem dielektrischen Grundmaterial 4 und wenigstens eine der Schichten 9 aus einem elektrisch leitfähigen Leitmaterial 5 besteht. Dies ist beispielshaft in Figur 6 dargestellt.

Dabei gilt, dass die Schicht 9 aus dem elektrisch leitfähigen Leitmaterial 5 besonders bevorzugt durch ein rohrförmiges, insbesondere zylinderrohrförmiges Blech gegeben ist. Bei dem Beispiel gemäß Figur 6 ist dies der Fall. Die Schicht 9 kann beispielsweise durch ein Metall- bzw. Blechrohr gegeben sein, dass aus Kupfer, Aluminium, Silber, Zinn oder Eisen oder einer Mischung aus zwei oder mehr dieser Metalle besteht. Bei dem Beispiel aus Figur 6 ist das Durchführungselement 1 beispielsweise durch eine innere Kunststoffschicht 3 und ein die innere Kunststoffschicht 3 umgebendes äußeres Metallrohr 9 gegeben.

Der umgekehrte Fall mit einer inneren Schicht 9 aus einem elektrisch leitfähigen Leitmaterial 5, etwa einem Metallrohr, und einer äußeren Schicht 6 aus einem dielektrischen Grundmaterial 4, etwa Kunstsoff, ist beispielhaft in Figur 7 gezeigt.

Es sei betont, dass alternativ dazu, dass eine Schicht 9 aus einem elektrisch leitfähigen Leitmaterial 5 besteht und eine zweite Schicht aus einem dielektrischen Grundmaterial 4 besteht, beispielsweise auch vorgesehen sein kann, dass eine Schicht - z.B. die äußere Schicht 9 - aus einem Leitmaterial 5 besteht und eine weitere Schicht 6 sowohl ein Grund- 4 als auch ein Leitmaterial 5 umfasst bzw. daraus besteht, wie es ebenfalls in den Figuren 6 und 7 angedeutet ist, in denen die innere (Fig. 6) bzw. die äußere (Fig. 7) Schicht mit den Bezugszeichen 3 und 6 für beide Fälle versehen ist.

Auch für den Fall, dass wenigstens eine Schicht 9 aus einem Leitmaterial, etwa ein Metallrohr, vorgesehen ist, kann das bzw. das jeweilige Durchführungselement 1 natürlich mehr als zwei Schichten umfassen, etwa drei oder vier oder mehr Schichten. Dies ist - für den Fall von drei Schichten - beispielshaft in den Figuren 8 und 9 dargestellt.

Bei dem Beispiel gemäß Figur 8 ist dabei eine Schicht aus elektrisch leitfähigen Leitmaterial 5, etwa einem Metallrohr, sowohl außen- als auch innenseitig von einer Schicht 3, 6 umgeben, die beispielsweise aus einem dielektrischen Grundmaterial 4 besteht oder die sowohl ein dielektrisches Grundmaterial 4 als auch ein elektrisch leitfähiges Leitmaterial 5 aufweist bzw. daraus besteht. Das Metallrohr 9 ist hier mit anderen Worten in die Schichten 3, 6 insbesondere mit oder aus Kunststoff eingebettet.

Figur 9 zeig ein Beispiel mit einem inneren und äußeren Metallrohr 9, 10 und einer dazwischenliegenden mittleren Schicht 3, 6, die beispielsweise aus einem dielektrischen Grundmaterial 4 besteht oder die sowohl ein dielektrisches Grundmaterial 4 als auch ein elektrisch leitfähiges Leitmaterial 5 aufweist bzw. daraus besteht

Über das bzw. die optional vorhandenen Metallrohre 9, 10 kann auf besonders geeignete Weise eine elektrische Leitfähigkeit des bzw. des jeweilige Durchführungselementes 1 erzielt werden.

Auch für die Schichten 3, 6, 7, 9, 10 dieser Beispiele gilt, dass sie ausgestaltet sein können, wie es vorstehend im Zusammenhang mit den vorangegangenen Figuren ausgeführt wurde.

Wie die vorstehend beschriebenen Beispiele verdeutlichen, können sich die Durchführungselemente 1 erfindungsgemäßer Durchführungsanordnungen 2 durch einen mehrschichtigen Aufbau auszeichnen, bei dem den verschiedenen Schichten 3, 6, 7, 9, 10 mit unterschiedlichen elektrisch leitenden bzw. nicht leitenden Funktionen ausgestattet sind. Es können Durchführungselemente 1 vorgesehen sein, die eines oder mehrere in Kunststoff eingebettete Metallrohre umfassen. Es ist auch möglich, einen mehrschichtigen, abwechselnden Aufbau von elektrisch leitenden zu nichtleitenden Schichten 3, 6, 7, 9, 10 zu erhalten.

Die Durchführungselemente 1 zeichnen sich durch elektrisch leitfähige Eigenschaften aus und können auch dielektrische Schichten zur Leitertrennung unterschiedliche leitender Schichten untereinander aufweisen.

Insbesondere über eingebettete, etwa eincompoundierte Leitmaterialien 5 kann auch die Wärmeleitfähigkeit beeinflusst bzw., eingestellt werden, sowohl in isotroper als auch anisotroper Richtung.

Für den Fall, dass das bzw. die Durchführungselemente mehrschichtig ausgebildet sind, gilt bevorzugt, dass wenigstens zwei der Schichten 3, 6, 7, 8 mittels eines Haftvermittlermaterials miteinander verbunden, insbesondere verschweißt sind. Dies gilt besonders bevorzugt für den Fall, dass wenigstens eine der Schichten 9, 10 durch ein rohrförmiges Metallblech gegeben ist, welches dann über das Haftvermittlermaterial mit wenigstens einer weiteren Schicht 3, 6, 7 verbunden ist.

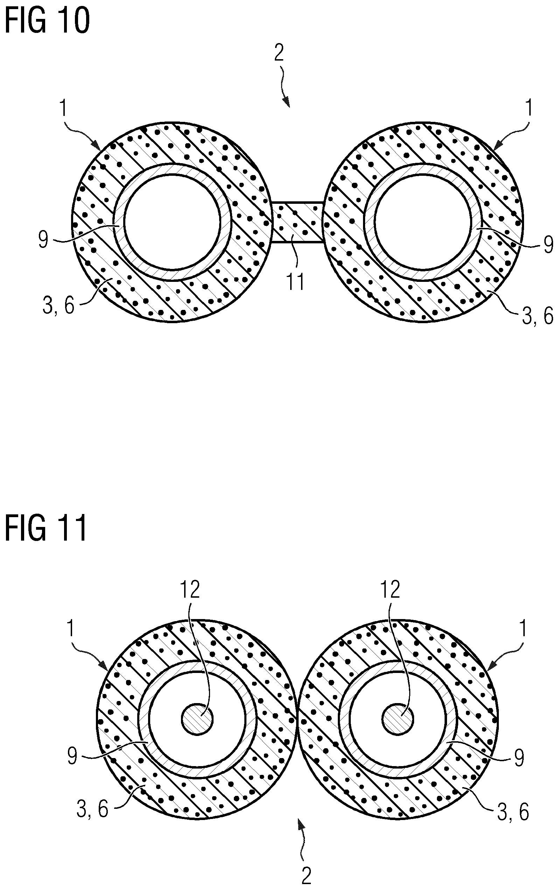

Alternativ dazu, dass eine erfindungsgemäße Durchführungsanordnung nur ein rohrförmiges Durchführungselement 1 umfasst, können auch zwei oder mehr solche vorhanden sein, wie es rein schematisch und beispielhaft in den Figuren 10 und 11 angedeutet ist. Die hier dargestellten zehnten und elften Ausführungsbeispiele erfindungsgemäßer Durchführungsanordnungen 2 umfassen jeweils zwei rohrförmige Durchführungselemente 1, die nebeneinanderliegend angeordnet und fest miteinander verbunden sind. Bei den gezeigten Beispielen erstrecken sich die beiden Durchführungselemente 1 parallel zueinander und sind außenseitig miteinander verbunden, im Falle von Figur 10 durch einen Verbindungssteg 11 und im Falle von Figur 11 ohne einen solchen mit ihren Außenseiten. Der Verbindungssteg 11 kann beispielswiese wie die äußeren Schichten 3, 6 aus Figur 10 oder der Beispiele aus einer der weiteren Figuren ausgestaltet sein. Die einzelnen Durchführungselemente 1 sind dabei jeweils so ausgestaltet, wie dasjenige aus Figur 7, wobei auch dies rein beispielhaft zu verstehen ist, und eines oder auch beide der Elemente 1 der Beispiele aus den Figuren 10 und 11 beispielsweise auch wie in den Figuren 1 bis 6, 8 oder 9 gezeigt oder auch nochmals anders ausgestaltet sein könnte.

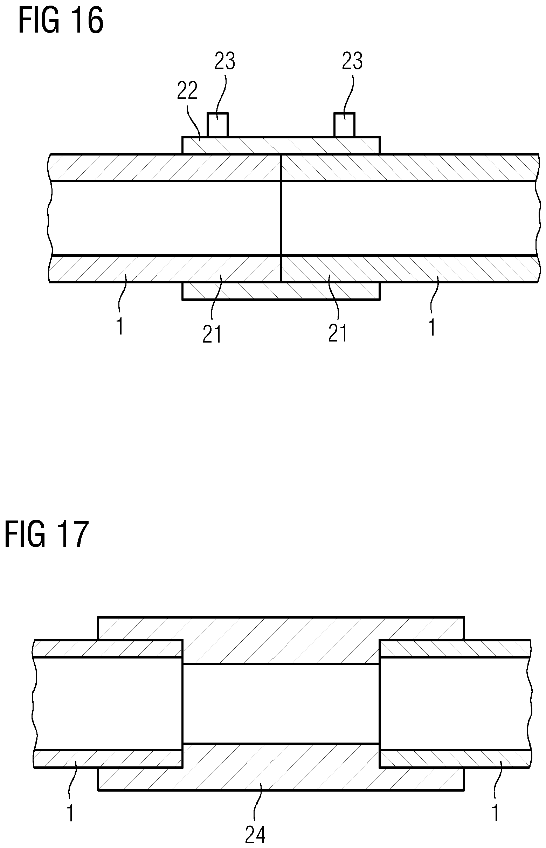

Alternativ oder zusätzlich dazu, dass wenigstens zwei Durchführungselemente 1 vorhanden sind, die nebeneinander liegen (Figuren 10 10 und 11), können auch wenigstens zwei Durchführungselemente 1 vorhanden sein, bezüglich derer gilt, dass wenigstens eines der Durchführungselemente 1 hinter einem anderen der Durchführungselemente 1 angeordnet ist (vgl. Figuren 16 und 17, auf die noch näher eingegangen wird)

In der Figur 11 sind - rein beispielhaft - auch Zuleitungen 11 für den Transformator dargestellt. Konkret erstreckt sich hier durch jedes der beiden rohrförmigen Durchführungselemente 1 jeweils wenigstens eine Zuleitung 11, von denen in der Figur eine in jedem Element 1 gezeigt ist. Durch jedes der Durchführungselemente 1 der Beispiele aus den Figuren 1 bis 10 können sich in analoger Weise jeweils eine oder auch mehrere Zuleitungen 12 für den Transformator erstrecken.

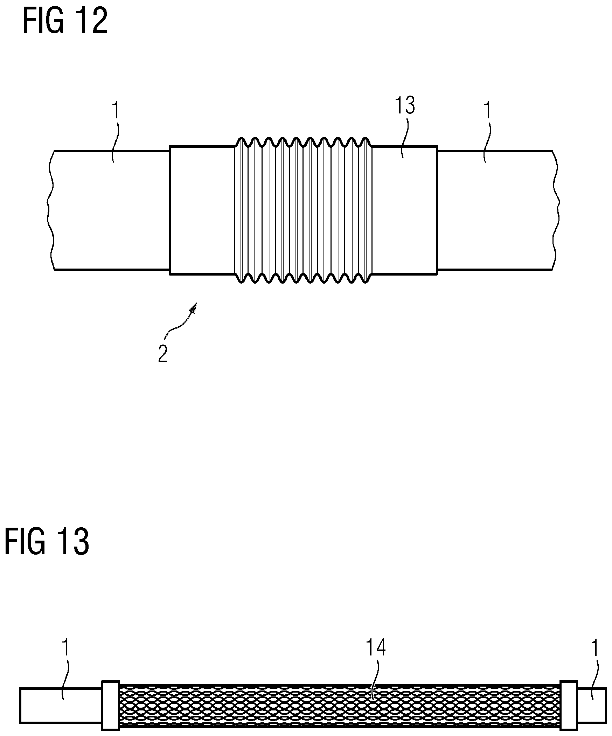

Die erfindungsgemäßen Durchführungsanordnungen 2 können neben den Durchführungselementen 1 und gegebenenfalls vorhandenen Zuleitungen 12 noch weitere Elemente umfassen. So kann beispielsweise vorgesehen sein, dass eine erfindungsgemäße Durchführungsanordnung 1 wenigstens ein flexibles Rohrelement 13 aufweist, wie es beispielhaft in Figur 12 dargestellt ist, die eine weiteres Ausführungsbeispiel erfindungsgemäßen Durchführungsanordnung 2 zeigt. Ist wenigstes ein flexibles Rohrelement 13 vorhanden, gilt bevorzugt, dass die Durchführungsanordnung 2 mehrere, etwa zwei rohrförmige Durchführungselemente 1 aufweist und das wenigstens eine flexible Rohrelement 13 die bzw. wenigstens zwei der rohrförmigen Durchführungselemente 1 miteinander verbindet, wie in Figur 12 schematisch dargestellt. Solche Rohrelemente 13 werden auch als Flexrohre bezeichnet und weisen in der Regel einen "ziehharmonikaartig" geformten flexiblen Abschnitt auf, wie er in Figur 12 erkennbar ist. In diesem Abschnitt ist das flexible Rohrelement 13 in Längsrichtung gewellt, etwa sinusförmig. Das flexible Rohrelement 13, welches bevorzugt aus wenigstens einem Metall besteht, ermöglicht es insbesondere, beim Einbau der Durchführungsanordnung 2 in einem Transformator besonders flexibel eine Winkelanpassung vornehmen zu können.

Es sei angemerkt, dass alternativ oder zusätzlich dazu, dass eine Durchführungsanordnung 2 ein Flexrohr 13 aufweist, vorgesehen sein kann, dass das oder wenigstens ein Durchführungselement 1 einer solchen wenigstens eine Schicht umfasst, die zumindest abschnittsweise insbesondere in Löngsrichtung gewellt ist. Beispielsweise können die rohrförmigen Bleche 9 und/oder die weitere Schicht bzw. Schichten 3, 6, 7, 8 aus den Ausführungsbeispielen gemäß den Figuren 6 bis 11 zumindest abschnittsweise gewellt sein.

Alternativ oder zusätzlich zu wenigstens einem flexiblen Rohrelement 13 kann eine erfindungsgemäße Durchführungsanordnung 2 auch wenigstens einen Metallgeflechtschlauch 14 umfassen (vgl. Figur 13). Ein solcher wird beispielsweise außenseitig über zwei einander zugewandte Endbereich zweier rohrförmiger Durchführungselemente 1 angeordnet, insbesondere darübergestülpt, wie in Figur 13 schematisch dargestellt. Ein Metallgeflechtschlauch 14 kann beispielsweise eine durchgehende Abschirmung und/oder elektrische Leitfähigkeit über zwei oder mehr rohrförmigen Durchführungselemente 1 hinweg gewährleisten.

Bezüglich aller vorstehend beschriebener Ausführungsbeispiele gilt, dass gemäß der vorliegenden Erfindung für die Leistungsdurchführung in Transformatoren die Vorteile von dielektrischen Materialien mit den Vorteilen von elektrischen leitfähigen Materialien auf optimale Weise kombiniert werden. Dielektrische Materialien, insbesondere Kunststoff, lassen sich in der Regel vergleichsweise leicht verarbeiten und Bauteile aus diesen lassen sich in der Regel auch leichter miteinander verbinden. Gegenüber Durchführungen allein aus beispielsweise Metall kann daher die Fertigung vereinfacht werden. Dielektrische Materialien sind auch oftmals günstiger und leichter, was ebenfalls Vorteile bietet. Da die dielektrischen Materialien mit leitfähigen kombiniert werden, kann gleichzeitig eine elektrische Leitfähigkeit erhalten und eine Ableitfunktion zuverlässig gewährleistet werden.

Das rohrförmigen Durchführungselement 1 des ersten Ausführungsbeispiels gemäß Figur 1 kann beispielsweise durch Extrusion oder Spritzgießen hergestellt werden. Die Schicht 3, welche bei diesem Beispiel das Durchführungselement 1 bildet, wird dann hergestellt, indem ein Ausgangsmaterial, das das Grundmaterial aufweist oder daraus besteht, bereitgestellt wird, und das Ausgangsmaterial zum Erhalt einer rohrförmigen Schicht extrudiert oder spritzgegossen wird, und während des Extrudierens oder Spritzgießens das Leitmaterial in das Grundmaterial eingebracht wird, bevorzugt in Faser- und/oder Pulverform.

Alternativ ist es auch möglich, dass die Schicht 3, die das Grundmaterial 4 und das Leitmaterial umfasst 5 oder daraus besteht, hergestellt wird, indem ein Ausgangsmaterial bereitgestellt wird, das bereits das Grundmaterial 4 und darin insbesondere in Pulver- und/oder Faserform eingebettet das Leitmaterial 5 aufweist oder daraus besteht, und das Ausgangsmaterial zum Erhalt einer rohrförmigen Schicht extrudiert oder spritzgegossen wird.

Mit anderen Worten kann das Leitmaterial 5 vor dem Extrudieren/Spritzgießen in das Grundmaterial 4 eingebettet, etwa eincompoundiert werden oder auch während das Extrudierens/Spritzgießens dem Grundmaterial 4 zugeführt werden.

Die Beispiele aus den Figuren 2 bis 5 können auf völlig analoge Weise hergestellt werden. Dabei sei angemerkt, dass für den Fall, dass eine Durchführungselement 1 mit mehr als einer durch Extrusion bzw. Spritzgießen hergestellten Schicht 3, 6, 7 herzustellen ist, wie es etwa in den Figuren 2 bis 5 gezeigt ist, zweckmäßiger Weise ein Mehrschichtwerkezug, etwa ein Mehrschichtextrusionskopf bzw. Mehrfachextrusionsspritzkopf zum Einsatz kommt. Bei einem Mehrschichtextrusionskopf sind mehrere unabhängig voneinander betriebene Extruder an einen Extrussionsspritzkopf angeschlossen. In dem Mehrfachextrusionsspritzkopf wird jede Schicht in Kanälen bis zum Verbundpunkt separat geführt. Die Kanäle umschließen den gesamten Kreisdurchmesser für die Rohrform. Diese angeschlossenen Extruder können unabhängig voneinander so geregelt werden, dass jede einzelne Materialschicht in ihrer Schichtstärke beeinflusst werden kann. So verlässt den Extrussionskopf ein Rohr, das n unterschiedliche Schichten gleichzeitig beinhaltet. Da alle unterschiedlichen Materialien in einen "flüssigen" Zustand innerhalb des Spritzkopfes aufeinandertreffen, verschmelzen die Oberflächenschichten der unterschiedlichen Materialien miteinander zu einem Verbund. Spritzköpfe für bis zu neun unterschiedliche Schichten sind vorbekannt. Jedoch kann ein Aufbau mit neun Schichten sehr komplex in der Anordnung der Extruder werden, da diese alle in diesen einen Spritzkopf eingeführt werden müssen und der Spritzkopf damit entsprechend groß ausfallen muss. Im Rahmen der vorliegenden Erfindung kommen besonders bevorzugt 2- und 3-fach Spritzköpfe für den Erhalt von Durchführungselementen 1 verwendet.

Was die Herstellung der Beispiele mit wenigstens einem Metallrohr 9, 10 gemäß den Figuren 6 bis 9 angeht, gilt folgendes.

Es kann insbesondere vorgesehen sein, dass die wenigstens eine Schicht 9, 10, die aus dem Leitmaterial 5 besteht, als bevorzugt innen- und/oder außenseitig mit einer Haftvermittlerschicht versehenes rohrförmiges Blech bereitgestellt wird, und die wenigstens eine Schicht, die aus dem Grundmaterial 4 und optional dem Leitmaterial 5 besteht, hergestellt wird, indem ein Ausgangsmaterial, das aus dem Grundmaterial 4 und optional dem Leitmaterial 5 besteht, bereitgestellt wird, und das Ausgangsmaterial zum Erhalt einer rohrförmigen Schicht 3, 6 extrudiert oder spritzgegossen wird, wobei das Ausgangsmaterial auf oder in das rohrförmige Blech 9, 10 extrudiert oder spritzgegossen wird. Wenn wenigstens eine Schicht 3 erhalten werden soll, die Grund- 4 und Leitmaterial 5 umfasst, kann auch vorgesehen sein, dass während des Extrudierens oder Spritzgießens das Leitmaterial 5 in das Grundmaterial 4 eingebracht wird, bevorzugt in Faser- und/oder Pulverform.

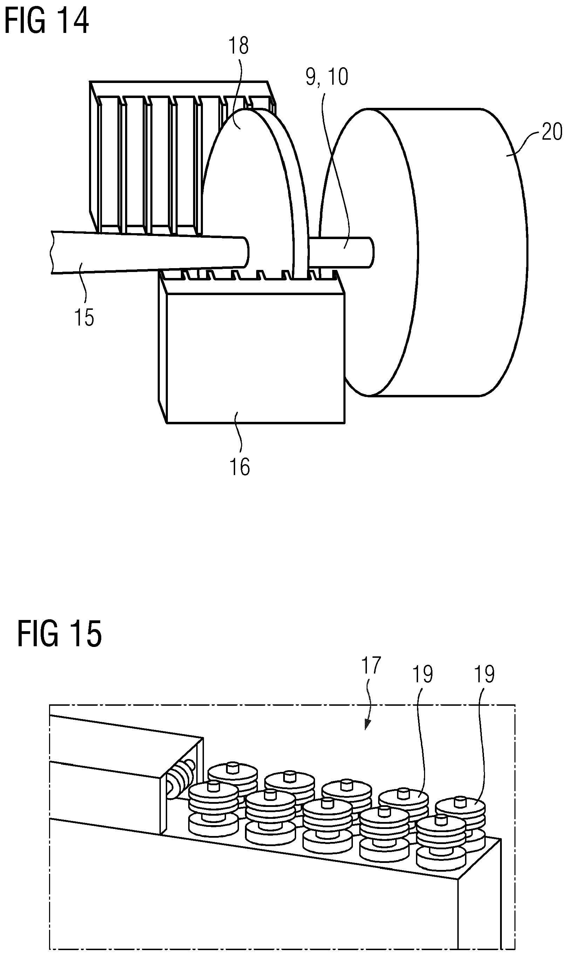

Das bzw. das jeweilige rohrförmige Blech, mit anderen Worten Metallrohr, das die Schichten 9 bzw. 10 bilden soll, wird besonders bevorzugt zunächst durch Umformen aus einem flachen Blech 15 erhalten, etwa durch Umformen in wenigstens einer Scheibenformstufe 16 und/oder in wenigstens einer Rollenformstufe 17 (vgl. Figur 15) und/oder in wenigstens einer Rohrformstufe. Die Figur 14 zeigt in stark vereinfachter, rein schematischer Darstellung eine Scheibenformstufe 16, in die ein insbesondere von einem Coilabwickler stammendes flaches Blechband 15 insbesondere in einer "Endlos"-Konfiguration eingeführt wird, um dieses in eine Zylinderrohrform zu bringen. Das zu einem zylindrischen Rohr gebogene Blech 9, 10 bzw. der entsprechende Blechabschnitt ist ebenfalls in der Figur 14 erkennbar.

In Figur 14 ist dabei beispielhaft eine Scheibenformstufe mit nur einer Scheibe 18 gezeigt. Es versteht sich, dass eine solche in vorbekannter Weise auch mehr Scheiben 18 aufweisen kann. Typischerweise sind mehrere Scheiben 18 in mehreren Stufen kaskadisch angeordnet.

Alternativ oder zusätzlich zu einer Scheibenformstufe 16 können auch beliebige andere Formstufen zum Einsatz kommen, die ein flaches Blech in ein rohrförmiges umformen können. In Figur 15 ist beispielhaft eine Rollenformstufe 17 mit mehreren Rollen 19 in stark vereinfachter, schematischer Darstellung gezeigt.

Es sei angemerkt, dass es einerseits möglich ist, dass die Breite des flachen Ausgangsbleches 15 und der Innendurchmesser des Rohres, in welches das Blech 15 umgeformt wird, derart gewählt ist bzw. wird, dass kein Überlapp erhalten wird sondern die Blechkanten im rohrförmigen Zustand bündig aneinander anliegen. Um zu verhindern, dass sich das rohrförmige Blech 9, 10 an dieser "Nahtstelle" öffnet, z.B., wenn es gebogen wird, kann die Nahtstelle anschließend verschweißt werden, beispielsweise mit einem Laserschweißverfahren. Um zu verhindern, dass sich das rohrförmige Blech 9, 10 an dieser "Nahtstelle" öffnet, z.B., wenn es gebogen wird, kann die Nahtstelle anschließend verschweißt werden, beispielsweise mit einem Laserschweißverfahren.

Alternativ dazu, dass die Blechbreite und der gewünschte Innendurchmesser entsprechend aneinander angepasst sind bzw. werden, kann die Blechbreite auch bewusst größer gewählt werden. Die Blechbreite kann derart gewählt werden, dass nach dem Umformen des flachen Blechs 15 in eine Rohrform ein Überlappungsbereich vorliegt, in dem dann zwei Endabschnitte des rohrförmigen Blechs 9, 10 überlappen. Der Überlapp kann dann ein unerwünschtes Öffnen des Bleches vermeiden. Dies gilt ganz besonders, wenn das Blech in bevorzugter Ausgestaltung an wenigstes einer Seite, konkret derjenigen Seite, die im zylinderrohrförmigen Zustand nach außen weist, mit einer Haftvermittlerschicht versehen ist, die dann im Überlappungsbereich ein Öffnen besonders zuverlässig vermeiden kann. Ein Schweißen, etwa Laserschweißen ist in diesem Falle nicht erforderlich. Bei dem gezeigten Beispiel ist ein Haftvermittlermaterial an der in Figur 14 nach oben weisenden Seite des flachen Bleches 15 vorgesehen und die Breite so gewählt, dass ein Überlapp erhalten wird.

Das zu einem zylindrischen Rohr gebogene Blech 9, 10 wird dann dem der Formstufe 16, 17 nachgeordneten Extrusionswerkzeug, gemäß Figur 14 einem Extrusionsspritzkopf 20, zugeführt. Dies ist ebenfalls in Figur 14 erkennbar. Mittels diesem wird wenigstens eine weitere zylinderrohrförmige Schicht 3, 6, 7 in bzw. auf das (jeweilige) Metallrohr 9, 10 extrudiert bzw. im Falle des Spritzgießens in bzw. auf das (jeweilige) Metallrohr 9, 10 spritzgegossen.

Das bzw. das jeweilige Metallrohr 9, 10 wird dazu mit in das Extrusionswerkzeug 20 einlaufen gelassen. Auch dies ist rein schematisch in Figur 14 angedeutet. Durch das Extrudat, welches beispielsweise im Druck- oder Schlauchspritzprozess aufgebracht werden kann, wird eine formschlüssige Verbindung zwischen dem bzw. dem jeweiligen rohrförmigen Blech 9, 10 und dem und der Rohrextrusion hergestellt.

Wie erwähnt kann alternativ zum Extrudieren auch Spritzgegossen werden. In diesem Falle wird das rohrförmige Blech 9, 10 bzw. werden die rohrförmigen Bleche 9, 10 jedoch nicht in das Werkzeug mit einlaufen gelassen, sondern sie werden in das Spritzgießwerkzeug mit eingelegt. Man kann dies auch als Spritzgießen mit Metallinlay bezeichnen. Auch hier liegt nach dem Spritzgießen eine formschlüssige Verbindung zwischen dem bzw. dem jeweiligen rohrförmigen Blech 9, 10 und der oder den weiteren, spritzgegossenen Schichten 2, 6, 7 vor. Spritzgießen mit Metallinlay kann natürlich auch in Mehrschichtform zum Einsatz kommen. Damit können Elemente 1 erhalten werden, welche unterschiedliche Materialien und Schichten in einem Produkt beinhalten.

Die weitere oder weiteren, insbesondere durch Extrusion bzw. Spritzgießen erhaltenen Schichten 3, 6, 7 umfassen jeweils ein dielektrisches Grundmaterial 4, etwa wenigstens einen Kunststoff, und optional eine Leitmaterial 5, beispielsweise wenigstens ein Metall in Pulver- und oder Faserform.

Über Endlos-Extrusion erhaltene Elemente können anschließend auf gewünschte Längen zugeschnitten werden.

Erhaltene Durchführungselemente 1 können auch miteinander verbunden werden, wobei unterschiedliche Verbindungstechnologien zum Einsatz kommen können. Es haben sich insbesondere das Stumpfschweißen, und/oder Heizwendelschweißen, und/oder Induktionsschweißen und/oder Kleben bewährt.

Beim Heizwendelschweißen kommt ein rohrförmiges Heizwerkzeug 22 zum Einsatz, in das eine oder mehrere Heizwendeln integriert sind, und das über zwei aneinander anliegende, zu verbindende Endbereiche zweier Durchführungselemente 1 positioniert werden kann, um diese zu erwärmen. Dies ist rein schematisch in Figur 16 dargestellt. Das Heizwerkzeug 22 weist Anschlüsse 23 zur Verbindung mit einer Stromquelle auf. Es erfolgt eine Erwärmung über die Erweichungstemperatur insbesondere des Grundmaterials 4, das bevorzugt durch einen oder mehrere Kunststoffe gegeben ist, und die beiden weichen Enden werden aneinandergeschoben. Nach einer Abkühlphase sind diese stoffschlüssig miteinander verbunden.

Beim Muffen-/Stumpfschweißen kommen Verbindungsteile, sogenannte Muffen 24 (vgl. Figur 17), zum Einsatz. Die zu verbindenden Enden 21 zweier Durchführungselemente 1 bzw. der Muffen 24 werden jeweils über die Erweichungstemperatur insbesondere des Grundmaterials 4, das bevorzugt durch einen oder mehrere Kunststoffe gegeben ist, erwärmt. Zu diesem Zweck werden sie auf an den Durchmesser angepasste Werkzeuge geschoben, mit deren Hilfe die Wärme von einer geregelten Heizung auf das Material übertragen wird. Gleichzeitig haben diese Werkzeuge die Funktion, das erweichte Material in der Kontur zu stabilisieren, so dass die beiden weichen Enden nach der Erwärmung an- bzw. ineinandergeschoben werden können. Durch das Ineinanderschieben der Enden in die Muffe 24 und den dabei ausgeübten leichten Druck verschmelzen die Materialien der beiden Elemente miteinander. Nach einer Abkühlphase sind die beiden Teile stoffschlüssig miteinander verbunden. Es sei angemerkt, dass alternativ zu der in Figur 17 gezeigten Muffe 24 für eine gerade Verbindung auch Muffen 24 Einsatz kommen können, die einen Winkle realisieren sowie T-förmige Muffen.

Der Vollständigkeit halber sei angemerkt, dass die Verbindung der beiden nebeneinanderliegenden Durchführungselemente 1 aus des Figuren 10 und 11 direkt beim Extrudieren bzw. Spritzgießen erhalten werden kann, indem die beiden Elemente 1 gelichzeitig mit einem Werkzeug entsprechender Form hergestellt, insbesondere Extrudiert bzw. Spritzgegossen werden, wobei man dann zwei Metallrohre 9, 10 in das jeweilige Werkzeug mit einlaufen lässt oder in das Spritzgusswerkzeug mit einlegt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Durchführungsanordnung (2) für einen Transformator mit wenigstens einem rohrförmigen Durchführungselement (1), das ein- oder mehrschichtig ausgebildet ist,
**dadurch gekennzeichnet, dass**
das wenigstens eine Durchführungselement (1) wenigstens eine Schicht (3, 6, 7, 8, 9, 10), die ein dielektrische Grundmaterial (4) und ein elektrisch leitfähiges Leitmaterial (5) aufweist oder daraus besteht, umfasst, und/oder
dass das wenigstens eine Durchführungselement (1) zwei oder mehr fest miteinander verbundene Schichten (3, 6, 7, 8, 9, 10) aufweist, wobei wenigstens eine der Schichten (3, 6, 7, 8, 9, 10) aus einem dielektrischen Grundmaterial (4) und wenigstens eine der Schichten (3, 6, 7, 8, 9, 10) aus einem elektrisch leitfähigen Leitmaterial (5) besteht.

2. Durchführungsanordnung (2) nach Anspruch 1,
**dadurch gekennzeichnet, dass** das wenigstens eine Durchführungselement(1) wenigstens eine Schicht (3, 6, 7, 8, 9, 10), die ein dielektrisches Grundmaterial (4) und ein elektrisch leitfähiges Leitmaterial (5) aufweist oder daraus besteht, umfasst,
und der Anteil des Leitmaterials (5) 20 bis 80 Gewichtsprozent der oder der jeweiligen Schicht (3, 6, 7, 8, 9, 10) beträgt, und/oder
dass das Leitmaterial (5) über die wenigstens eine Schicht (3, 6, 7, 8, 9, 10) verteilt ist, und/oder
dass das Leitmaterial (5) in das Grundmaterial (4) eingebettet, insbesondere einextrudiert und/oder eincompoundiert ist, bevorzugt, wobei das Leitmaterial (5) in Faserform und/oder in Pulverform in das Grundmaterial (4) eingebettet ist.

3. Durchführungsanordnung (2) nach Anspruch 1 oder 2,
**dadurch gekennzeichnet, dass** das wenigstens eine Durchführungselement (1) mehrschichtig ausgebildet ist, bevorzugt, wobei wenigstens zwei Schichten (3, 6, 7, 8, 9, 10) mittels eines Haftvermittlermaterials miteinander verbunden, insbesondere verschweißt sind.

4. Durchführungsanordnung (2) nach Anspruch 3,
**dadurch gekennzeichnet, dass** mehrere der Schichten (3, 6, 7, 8, 9, 10) jeweils ein dielektrisches Grundmaterial (4) und ein elektrisch leitfähiges Leitmaterial (5) aufweisen, bevorzugt, wobei sich der Leitwert dieser Schichten (3, 6, 7, 8, 9, 10) voneinander unterscheidet.

5. Durchführungsanordnung (2) nach Anspruch 3 oder 4,
**dadurch gekennzeichnet, dass** wenigstens eine der Schichten (3, 6, 7, 8, 9, 10) ein dielektrisches Grundmaterial (4) und ein elektrisch leitfähiges Leitmaterial (5) aufweist, und wenigstens eine der Schichten (3, 6, 7, 8, 9, 10) aus einem dielektrischen Grundmaterial (4) oder aus einem elektrisch leitfähigen Leitmaterial (5) besteht.

6. Durchführungsanordnung (2) nach einem der vorhergehenden Ansprüche,
**dadurch gekennzeichnet, dass** das oder wenigstens eines der dielektrischen Grundmaterialien (4) einen Kunststoff oder eine Kombination mehrerer Kunststoffe umfasst oder durch einen Kunststoff oder eine Kombination mehrerer Kunststoffe gegeben ist, bevorzugt, wobei es sich um einen oder mehrere Kunststoffe ausgewählt aus der Gruppe umfassend PE, PA, POM-C, PC, PSU, PES, PESU, PVDF, PTFE, PPS PEEK und PET handelt.

7. Durchführungsanordnung (2) nach einem der vorhergehenden Ansprüche,
**dadurch gekennzeichnet, dass** das oder wenigstens eines der elektrisch leitfähigen Leitmaterialien (5) ein Metall oder eine Kombination mehrerer Metalle umfasst oder durch ein Metall oder eine Kombination mehrerer Metalle gegeben ist, bevorzugt, wobei es sich um eines oder mehrere Metalle ausgewählt aus der Gruppe umfassend Kupfer, Aluminium, Silber, Zinn und Eisen handelt, und/oder
dass das oder wenigstens eines der elektrisch leitfähigen Leitmaterialien (5) Kohlenstoff, insbesondere Graphit, und/oder wenigstens einen dotierten Kunststoff und/oder wenigstens ein dotiertes oder metallisiertes Glas und/oder wenigstens eine dotierte oder metallisierte Keramik umfasst oder dadurch gegeben ist.

8. Durchführungsanordnung (2) nach Anspruch 7,
**dadurch gekennzeichnet, dass** das wenigstens eine Durchführungselement (1) eine oder mehrere aus einem elektrisch leitfähigen Leitmaterial (5) bestehende Schichten (9, 10) aufweist, wobei die oder wenigstens eine dieser Schichten (9, 10) durch ein in Rohrform gebrachtes Blech gegeben ist.

9. Durchführungsanordnung (2) nach einem der vorhergehenden Ansprüche,
**dadurch gekennzeichnet, dass** die Durchführungsanordnung (2) mehrere rohrförmige Durchführungselemente (1) umfasst,
wobei die mehreren Durchführungselemente (1) bevorzugt miteinander verbunden, insbesondere miteinander verschweißt sind, und/oder
wobei sich wenigstens zwei der Durchführungselemente (1) parallel zueinander erstrecken, und/oder
wobei wenigstens zwei der Durchführungselemente (1) nebeneinander angeordnet sind, und/oder
wobei wenigstens eines der Durchführungselemente (1) hinter einem anderen der Durchführungselemente (1) angeordnet ist.

10. Durchführungsanordnung (2) nach einem der vorhergehenden Ansprüche,
**dadurch gekennzeichnet, dass** die Durchführungsanordnung (2) wenigstens einen Metallgeflechtschlauch (14) umfasst, bevorzugt, wobei die Durchführungsanordnung (2) mehrere rohrförmige Durchführungselemente (1) aufweist und der wenigstens eine Metallgeflechtschlauch (14) wenigstens zwei der rohrförmigen Durchführungselemente (1) miteinander verbindet,
und/oder dass die Durchführungsanordnung (2) wenigstens ein flexibles Rohrelement (13) umfasst, bevorzugt, wobei die Durchführungsanordnung (2) mehrere rohrförmige Durchführungselemente (1) umfasst und das wenigstens eine flexible Rohrelement (13) wenigstens zwei rohrförmige Durchführungselemente (1) miteinander verbindet.

11. Verfahren zur Herstellung einer Durchführungsanordnung (2) nach einem der vorhergehenden Ansprüche mit wenigstens einem rohrförmigen Durchführungselement (1) mit wenigstens einer Schicht (3, 6, 7, 8, 9, 10), die ein dielektrisches Grundmaterial (4) und ein elektrisch leitfähiges Leitmaterial (5) aufweist oder daraus besteht,
bei dem das oder wenigstens eines der Durchführungselemente (1) durch Extrusion oder Spritzgießen erhalten wird,
wobei die wenigstens eine Schicht (3, 6, 7, 8, 9, 10), die das Grundmaterial (4) und das Leitmaterial (5) umfasst oder daraus besteht, hergestellt wird, indem ein Ausgangsmaterial, das das Grundmaterial (4) aufweist oder daraus besteht, bereitgestellt wird, und das Ausgangsmaterial zum Erhalt einer rohrförmigen Schicht (3, 6, 7, 8, 9, 10) extrudiert oder spritzgegossen wird, und während des Extrudierens oder Spritzgießens das Leitmaterial (5) in das Grundmaterial (4) eingebracht wird, bevorzugt in Faser- und/oder Pulverform, oder
die wenigstens eine Schicht (3, 6, 7, 8, 9, 10), die das Grundmaterial (4) und das Leitmaterial (5) umfasst oder daraus besteht, hergestellt wird, indem ein Ausgangsmaterial, dass das Grundmaterial (4) und darin insbesondere in Pulver- und/oder Faserform eingebettet das Leitmaterial (5) aufweist oder daraus besteht, bereitgestellt wird, und das Ausgangsmaterial zum Erhalt einer rohrförmigen Schicht (3, 6, 7, 8, 9, 10) extrudiert oder spritzgegossen wird.

12. Verfahren zur Herstellung einer Durchführungsanordnung (2) nach einem der Ansprüche 1 bis 10 mit wenigstens einem rohrförmigen Durchführungselement (1) mit wenigstens einer Schicht (3, 6, 7, 8, 9, 10), die aus einem dielektrischen Grundmaterial (4) und optional einem elektrisch leitfähigen Leitmaterial (5) besteht, und mit wenigstens einer Schicht (3, 6, 7, 8, 9, 10), die aus einem elektrisch leitfähigen Leitmaterial (5) besteht, insbesondere nach Anspruch 11, bei dem
die wenigstens eine Schicht (3, 6, 7, 8, 9, 10), die aus dem Leitmaterial (5) besteht, als bevorzugt innen- und/oder außenseitig mit einer Haftvermittlerschicht versehenes rohrförmiges Blech (9, 10) bereitgestellt wird, und die wenigstens eine Schicht (3, 6, 7, 8, 9, 10), die aus dem Grundmaterial (4) und optional dem Leitmaterial (5) besteht, hergestellt wird, indem ein Ausgangsmaterial, das aus dem Grundmaterial (4) und optional dem Leitmaterial (5) besteht, bereitgestellt wird, und das Ausgangsmaterial zum Erhalt einer das rohrförmigen Schicht (3, 6, 7, 8, 9, 10) extrudiert oder spritzgegossen wird, wobei das Ausgangsmaterial auf oder in das rohrförmige Blech (9, 10) extrudiert oder spritzgegossen wird, wobei optional während des Extrudierens oder Spritzgießens das Leitmaterial (5) in das Grundmaterial (4) eingebracht wird, bevorzugt in Faser- und/oder Pulverform.

13. Verfahren nach Anspruch 12,
**dadurch gekennzeichnet, dass** dass für das Extrudieren ein Extrusionswerkzeug (20) zum Einsatz kommt und das oder das jeweilige rohrförmige Blech (9, 10) während des Extrusionsvorganges durch das Extrusionswerkzeug (20) gefördert wird, oder dass für das Spritzgießen ein Spritzgießwerkzeug zum Einsatz kommt und das oder das jeweilige rohrförmige Blech (9, 10) vor dem Spritzgießen in das Spritzgießwerkzeug eingelegt wird, und/oder dass das rohrförmige Blech (9, 10) durch Umformen aus einem flachen Blech (15) erhalten wird, insbesondere durch Umformen in wenigstens einer Scheibenformstufe (16) und/oder in wenigstens einer Rollenformstufe (17) und/oder in wenigstens einer Rohrformstufe.

14. Transformator umfassend wenigstens eine Durchführungsanordnung (2) nach einem der Ansprüche 1 bis 10.

15. Verwendung einer Durchführungsanordnung (2) nach einem der Ansprüche 1 bis 10 zur elektrischen Ableitung von Spannungen, insbesondere bei einem Transformator.
